# EUROPEAN PATENT APPLICATION

(11) **EP 1 743 785 A1**
(43) Date of publication of application: **17.01.2007**
(21) Application number: 06115520.6
(22) Date of filing: 15.06.2006
(51) Int. Cl.: B60G 17/02, B60G 15/06

(54) **Preloading device of a spring**

(30) Priority: 12.07.2005 IT MI20051323
(71) Applicant: PIAGGIO & C. S.p.A., 56025 Pontedera (Pisa) (IT)
(72) Inventor: Marcacci, Maurizio, 57128 Livorno (IT)
(74) Representative: Coppo, Alessandro

(57) **Abstract**

The present invention concerns a preloading device (10) of a spring of a shock absorber of the type equipped with an adjustment ring nut (2) of the preloading, functionally connected to the spring (1) and adapted to be moved, with respect to the shock absorber axis, to increase or decrease the preloading of the spring (1). The device (10) has at least one sleeve (3), at least one gearwheel (4), rigidly connected to the sleeve (3), at least one worm screw (8) to make the gearwheel (4) rotate and consequently move the ring nut (2), and at least one electric motor (11) adapted to rotate the worm screw (8).

## Description

The present invention regards an adjustment device of the preloading of the spring of a shock absorber.

The preloading of the spring of a shock absorber of a motorcycle, in addition to adjusting the height of the vehicle, serves to confer a more or less rigid functioning of the suspensions over bumps. Therefore, operating on this parameter modifies the behaviour of the motorcycle while cornering, which can pass from understeering to oversteering such that the preloading of the spring of the shock absorber increases or reduces.

With this adjustment, the length of the spring of the shock absorber in the start position is therefore varied.

Considering that the distance between the turns of the spring influences the load of the same spring, essentially by varying the preloading of the spring, the force is modified which must be applied to the spring before beginning to compress it. This adjustment depends strictly on the weight of the motorcycle-pilot complex, and must therefore be carried out as a function of the body weight of the pilot. Such value can be varied through the ring nuts placed just above the spring. Essentially this involves screwing (to increase the preload) or unscrewing the ring nuts which hold the spring slightly compressed even in the absence of external forces. It is essential to increase the preloading only in the case wherein the suspension bottoms out, otherwise the spring is not capable of absorbing the small bumps.

The adjustment in conventional vehicles occurs manually, as anticipated.

In light of the above, it appears evident the need to be able to arrange an adjustment device of the preloading of the spring, like the one according to the invention, which does not require a manual intervention by the driver of the motor vehicle but only the simple operation of a control located on the vehicle handle.

Object, therefore, of the present invention is that of resolving the problems of the prior art by providing an adjustment device of the preloading of the spring which does not require a manual intervention by the driver of the motor vehicle.

A further object of the present invention is that of making an adjustment device of the preloading of the spring equipped with extreme structural and functional simplicity.

These and other objects are achieved by the adjustment device of the preloading of the spring according to the present invention which has the characteristics of the attached claim 1.

Further characteristics and advantages of the present invention will be clearer from the following description, given as illustrative and not limiting with reference to the attached drawings, wherein:
- Figure 1 shows a lateral schematic view, partially sectional, of a first embodiment of the adjustment device of the preloading of the spring according to the present invention;
- Figure 2 shows a schematic view, partially sectional and along the axis of the shock absorber cylinder, of the adjustment device of the preloading of the spring according to the present invention; and

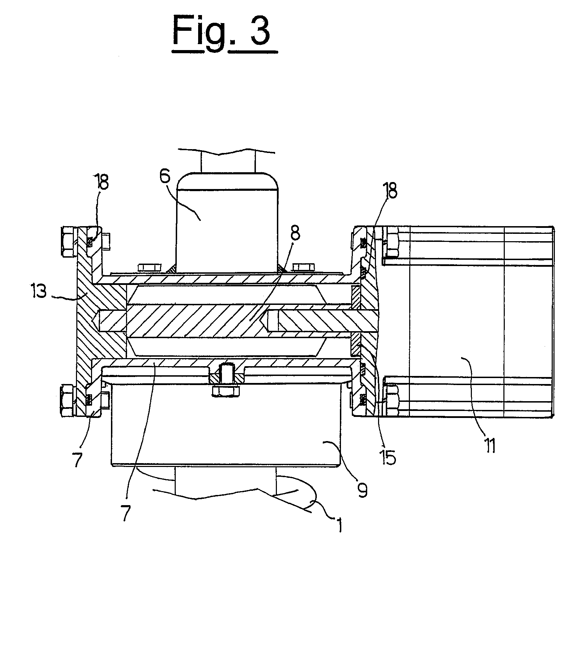

- Figure 3 shows a schematic view, partially sectional and along the axis of the casing, of the adjustment device of the preloading of the spring according to the present invention;

With reference to the attached figures, it is possible to observe a preloading device 10 of a spring 1 for shock absorbers of the type equipped with an adjustment ring nut 2 of the preloading, functionally connected to the spring 1 and adapted to be moved, with respect to the shock absorber axis, to increase or decrease the preloading of the spring 1.

The device 10 moreover presents at least one sleeve 3, at least one gearwheel 4, rigidly connected to the sleeve 3, at least one worm screw 8 adapted to make the gearwheel 4 rotate and to consequently move the ring nut 2, and at least one electric motor 11 adapted to make the worm screw 8 rotate.

The sleeve 3 is externally threaded so to be rigidly coupled to the ring nut 2 due to a corresponding thread foreseen inside the latter.

The gearwheel 4 transmits the motion to the threaded sleeve 3 by means of a tongue (16).

The device 10 according to the present invention therefore permits the adjustment of the preloading of the spring 1 of the rear shock absorber 6 without having to recur to a manual intervention by the driver of the motor vehicle, but by the simple operation of a control, not shown, located for example on the vehicle handlebar.

The control, not illustrated, operates the electric motor 11 to make the worm screw 8 rotate in one direction or in the opposite direction, which consequently makes the ring nut 2 move. As mentioned above, the moving of the ring nut 2 between positions of equilibrium controls the preloading of the spring 1.

Advantageously according to the present invention, all the parts composing the device 10 are contained within a casing 7 and a lower cover 9.

The worm screw 8 is coaxially mounted on the casing 7 and is supported at one end by the motor 11 and at the other end by a cap 13, which is fixed centred on the casing 7.

The cap 13 has the support function and absorbs the axial thrusts coming from the motor 11.

In detail, the worm screw 8 is supported by the motor 11 through a bearing 15, which in addition to carrying out support functions absorbs the axial thrusts directed towards the motor 11.

The casing 7 is made symmetrical with respect to a plane passing through the axis of the wheel and normal to the axis of the screw 8, so to permit mounting the electric motor 11 either to the right or left with respect to the same casing 7.

The casing 7 mainly has the role insulating all of the components of the adjustment device from external agents, helped in this by the lower cover 9, and supports the components of the device 10.

The casing 7 moreover permits the installation of the device 10 on the shock absorber 6, as will be explained in greater detail below.

Returning to the ring nut 2, which as anticipated is screwed on the outer thread of the sleeve 3, it should be underlined that the rotation of the ring nut 2 with respect to the casing 7 is blocked by suitable flat surfaces made on the cover 9.

The gearwheel 4, preferably helical, is fit on the threaded sleeve 3; the latter rotates around a bush 17, advantageously in Teflon.

The bush 17 is equipped with a small collar, not shown, centred on the casing 7; the casing 7 therefore also carries out the role of axial support for the sleeve 3.

Between the small collar of the bush and the flat surface of the casing 7 there is a further Teflon ring with antifriction function.

The device 10 according to the present invention is coaxially supported with the cylinder of the shock absorber 6 through a support flange 5.

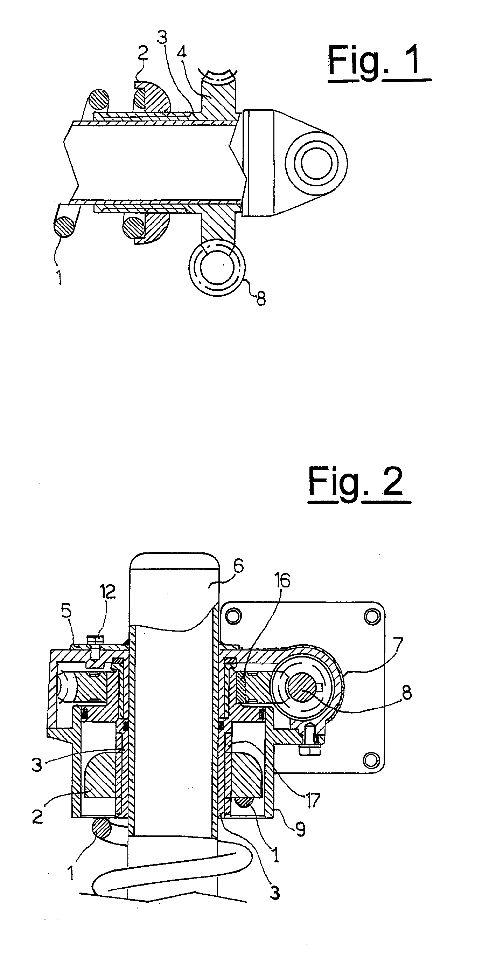

In particular, as is better visible in figure 2, the device 10 is fixed on the aforesaid flange 5 through screws and bolts 12.

According to another advantageous aspect of the present invention, the adjustment device 10 is equipped with gaskets to avoid the release of oil and to block the entrance of water and dust inside the casing 7 in the zone containing the worm screw 8 and the gearwheel 4.

In particular, the gaskets are represented by two O-rings 18 respectively interposed between the casing 7 and the cap 13 and between the bearing 15 and the casing 7, to which a paper gasket, not shown, is added between the lower cover 9 and the casing 7.

The electric motor 11 is a stepper motor which permits controlling, even for turn fractions, the rotations of the ring nut 2.

The motor 11, in known manner, is connected to a control circuit board, not directly shown.

The present invention was described as illustrative and not limiting according to its preferred embodiments, but it should be understood that variations and/or modifications can be made by men skilled in the art without for this departing from the related protective scope, as defined by the attached claims.

## Claims

1. Preloading device (10) of a spring (1) for shock absorbers of the type equipped with an adjustment ring nut (2) of the preloading, functionally connected to said spring (1) and adapted to be moved, with respect to the shock absorber (6) axis, to increase or decrease the preloading of said spring (1) **characterised in that** it comprises at least one sleeve (3), at least one gearwheel (4), rigidly connected to said sleeve (3), at least one worm screw (8) adapted to make said gearwheel (4) rotate and, consequently, to move said ring nut (2), and at least one electric motor (11) adapted to rotate said worm screw (8).

2. Preloading device according to claim 1,
**characterised in that** it comprises a tongue for transmitting the motion from said gearwheel (4) to said sleeve (3).

3. Device (10) according to claim 1, **characterised in that** it comprises at least one casing (7) and at least one lower cover (9) for containing the parts composing said device (10).

4. Preloading device (10) according to claim 1,
**characterised in that** it comprises at least one bearing (15) adapted to support said worm screw (8) and to absorb the axial thrusts directed towards said motor (11).

5. Preloading device according to claim 3,
**characterised in that** it comprises at least one cap (13) centred on said casing (7) for supporting said worm screw (8) from the opposite side of said motor (11), and absorbing the axial thrusts coming from said motor (11).

6. Preloading device (10) according to claim 1,
**characterised in that** it comprises a support flange (5), fixed to said shock absorber (6), adapted to associate said device (10) with said shock absorber (6) by means of screws and bolts (12).

7. Preloading device (10) according to any one of the preceding claims from 3-6, **characterised in that** it comprises gasket elements for avoiding the release of oil and avoiding the entrance of water and dust inside said casing (7).

8. Preloading device (10) according to claim 1,
**characterised in that** said electric motor (11) is a stepper motor.

9. Preloading device (10) according to claim 8,
**characterised in that** it comprises control means for controlling said motor (11).
